# EUROPEAN PATENT APPLICATION

(11) **EP 3 863 333 A1**
(43) Date of publication of application: **11.08.2021**
(21) Application number: 19878295.5
(22) Date of filing: 30.10.2019
(51) Int. Cl.: H04W 48/08

(54) **NETWORK ACCESS METHOD AND APPARATUS**

(30) Priority: 01.11.2018 CN 201811296777
(71) Applicant: Huawei Technologies Co., Ltd., Shenzhen, Guangdong 518129 (CN)
(72) Inventor: HUANG, Qufang, Shenzhen, Guangdong 518129 (CN); XU, Xiaoying, Shenzhen, Guangdong 518129 (CN); FAN, Qiang, Shenzhen, Guangdong 518129 (CN)
(74) Representative: Pfenning, Meinig & Partner mbB
(86) International application number: PCT/CN2019/114428
(87) International publication number: WO 2020/088543

(57) **Abstract**

A network access method and an apparatus relate to the field of communications technologies, and are used to support an industrial terminal in accessing a network when an architecture in which a control node sinks is used in a communications network. The method includes: An access network device sends an access list of a cell, where the access list of the cell includes at least one MAC address or group identifier. The access network device receives a message 3 sent by a terminal, where the message 3 includes a MAC address or a group identifier of the terminal. The access network device determines, depending on whether the MAC address or the group identifier of the terminal exists in the access list of the cell, whether the terminal can access the cell. This application is applicable to a process in which a terminal accesses a network.

## Description

This application claims priority to Chinese Patent Application No. 201811296777.1, filed with the China National Intellectual Property Administration on November 1, 2018 and entitled "NETWORK ACCESS METHOD AND APPARATUS", which is incorporated herein by reference in its entirety.

### TECHNICAL FIELD

This application relates to the field of communications technologies, and in particular, to a network access method and an apparatus.

### BACKGROUND

Currently, an architecture in which a control node sinks is used in a communications network. In other words, the control node is disposed on an access network side. A base station receives data of an industrial control service from the control node, and transmits the data of the industrial control service to an industrial terminal. In addition, the base station receives data of an industrial control service from the industrial terminal, and transmits the industrial control data to the control node. In this way, nodes that data transmitted between the control node and the industrial terminal needs to pass through are reduced, to meet a delay requirement of the industrial control service.

When the architecture in which the control node sinks is used in the communications network, a current network access solution is not applicable to the industrial terminal. Specifically, the current network access solution is as follows: A terminal detects signal strength of a cell, and if the signal strength of the cell is greater than a threshold, the terminal accesses the cell. However, if a cell cannot support an industrial control service requested by an industrial terminal, even if a signal strength of the cell is relatively high, and the industrial terminal camps on the cell, the industrial terminal cannot normally work. For this technical problem, no corresponding solution is provided in a conventional technology.

### SUMMARY

This application provides a network access method and an apparatus, to provide a technical solution for an industrial terminal to access a network when an architecture in which a control node sinks is used in a communications network.

To achieve the foregoing objectives, the following technical solutions are used in this application.

According to a first aspect, a network access method is provided. The network access method includes: An access network device sends an access list of a cell, where the access list of the cell includes at least one media access control (media access control, MAC) address or group identifier. The access network device receives a message 3 sent by a terminal, where the message 3 includes a MAC address or a group identifier of the terminal. The access network device determines, depending on whether the MAC address or the group identifier of the terminal exists in the access list of the cell, whether the terminal can access the cell. It may be understood that the access list of the cell is used to indicate terminals that can access the cell. To be specific, when the MAC address or the group identifier of the terminal exists in the access list of the cell, normal working of the terminal can be ensured in the cell. Therefore, the access network device determines, depending on whether the MAC address or the group identifier of the terminal exists in the access list of the cell, whether the terminal can access the cell. This can avoid a case in which the terminal cannot work normally after accessing the cell.

In a possible design, the method further includes: The access network device sends common configuration information, where the common configuration information is used to indicate common configuration parameters of a working group, the common configuration information carries a group radio network temporary identifier (radio network temporary identity, RNTI), there is a correspondence between the group RNTI and a group identifier of the working group, and the working group includes at least one terminal. In this way, the access network device does not need to send a plurality of pieces of information to indicate a common configuration parameter to each terminal in the working group. This reduces signaling overheads.

Optionally, the configuration parameters include at least one of the following: a radio bearer (radio bearer, RB) index, a service data adaptation protocol (service data adapt protocol, SDAP) parameter, a packet data convergence protocol (packet data convergence protocol, PDCP) parameter, and a radio link control (radio link control, RLC) parameter.

In a possible design, the method further includes: The access network device receives authentication request information sent by the terminal. If the terminal is a first-type terminal, the access network device sends the authentication request information to a control center, and receives authentication result information sent by the control center. If the terminal is a second-type terminal, and a service requested by the terminal is a first-type service, the access network device sends the authentication request information to a control center, and receives authentication result information sent by the control center. If the terminal is a second-type terminal and a service requested by the terminal is a second-type service, the access network device sends the authentication request information to a core network element, and receives authentication result information sent by the core network element. The access network device sends the authentication result information to the terminal. Based on the foregoing technical solution, the access network device forwards the authentication request information of the terminal to a corresponding device (for example, the control center or the core network element) based on a type of the terminal and/or a type of the service requested by the terminal, so that an authentication procedure of the terminal can be smoothly completed. This ensures security of a communications network.

In a possible design, the method further includes: The access network device sends the MAC address of the terminal to a target control node, where the target control node is a control node configured to manage the terminal. The access network device sends a MAC address of the target control node to the terminal. In this way, the target control node and the terminal may transmit data to each other based on the MAC address of the other party. In addition, in a data transmission process, the access network device, the terminal, or the target control node may compress a packet header of a data packet, to reduce transmission overheads.

In a possible implementation, the method further includes: The access network device sends, to the terminal, logical channel identifiers corresponding to at least two target control nodes. Alternatively, the access network device allocates at least two RNTIs to the terminal, where each RNTI corresponds to one target control node. Therefore, in a data transmission process, the access network device or the terminal may determine, based on the RNTIs or the logical channel identifiers, a target control node that is a sender/receiver of a compressed data packet.

In a possible design, the method further includes: The access network device obtains the MAC address of the terminal and a MAC address of a control node. The access network device generates a context list, where the context list includes a correspondence between the MAC address of the terminal and a context identifier, and a correspondence between the MAC address of the control node and a context identifier. Compared with a conventional technology in which an access network device can generate a context list only by learning of an address of a packet header of a data packet, in the technical solution of this application, the access network device does not need to learn of an address of the packet header of the data packet. This implements quick generation of the context list.

In a possible design, the method further includes: The access network device obtains a context list from a core network element, where the context list includes a correspondence between a MAC address and a context identifier. In this way, the access network device may compress or decompress a data packet based on the context list.

In a possible design, the method further includes: The access network device extracts data of a preset quantity of bytes from a payload of an Ethernet data frame. The access network device sends the data of the preset quantity of bytes to the terminal. In this way, in a process of transmitting the Ethernet data frame, useless padding in the Ethernet data frame is not transmitted between the terminal and the access network device, and utilization of air interface resources is improved.

Optionally, the preset quantity of bytes is indicated by an application server or the core network element. Alternatively, the preset quantity of bytes is preconfigured.

According to a second aspect, a network access method is provided. The network access method includes: A terminal receives an access list of a cell sent by an access network device, where the access list of the cell includes at least one MAC address or group identifier. The terminal detects whether a MAC address or a group identifier of the terminal exists in the access list of the cell. If the MAC address or the group identifier of the terminal exists in the access list of the cell, the terminal sends a message 3 to the access network device, to access the cell, where the message 3 includes the MAC address or the group identifier of the terminal. It may be understood that the access list of the cell is used to indicate terminals that can access the cell. To be specific, when the MAC address or the group identifier of the terminal exists in the access list of the cell, the terminal may learn that the cell can provide a corresponding service. In this way, when the terminal accesses the cell, normal working of the terminal can be ensured.

In a possible design, the method further includes: The terminal receives, based on a group RNTI of the terminal, common configuration information sent by the access network device, where the common configuration information is used to indicate common configuration parameters of a working group, the common configuration information carries the group RNTI, there is a correspondence between the group RNTI and a group identifier of the working group, and the working group includes at least one terminal. In this way, the access network device does not need to send a plurality of pieces of information to indicate a common configuration parameter to each terminal in the working group. This reduces signaling overheads.

Optionally, the configuration parameters include at least one of the following: an RB index, an SDAP parameter, a PDCP parameter, and a radio link control RLC parameter.

In a possible design, the method further includes: If the terminal is a first-type terminal, by using the access network device, the terminal sends authentication request information to a control center, and receives authentication result information sent by the control center. If the terminal is a second-type terminal, and a service requested by the terminal is a first-type service, by using the access network device, the terminal sends authentication request information to a control center, and receives authentication result information sent by the control center. If the terminal is a second-type terminal and a service requested by the terminal is a second-type service, by using the access network device, the terminal sends authentication request information to a core network element, and receives authentication result information sent by the core network element. Based on the foregoing technical solution, the access network device forwards the authentication request information of the terminal to a corresponding device (for example, the control center or the core network element) based on a type of the terminal and/or a type of the service requested by the terminal, so that an authentication procedure of the terminal can be smoothly completed. This ensures security of a communications network.

In a possible design, the method further includes: The terminal receives a MAC address of a target control node sent by the access network device, where the target control node is a control node configured to manage the terminal. In this way, the target control node and the terminal may transmit data to each other based on the MAC address of the other party. In addition, in a data transmission process, the access network device, the terminal, or the target control node may compress a packet header of a data packet, to reduce transmission overheads.

In a possible design, the method further includes: The terminal receives logical channel identifiers corresponding to at least two target control nodes sent by the access network device. Alternatively, the terminal obtains at least two RNTIs, where each RNTI corresponds to one target control node. Therefore, in a data transmission process, the access network device or the terminal may determine, based on the RNTIs or the logical channel identifiers, a target control node that is a sender/receiver of a compressed data packet.

In a possible design, the method further includes: The terminal obtains a context list from the access network device, where the context list includes a correspondence between the MAC address of the terminal and a context identifier, and a correspondence between a MAC address of a control node and a context identifier. Compared with a conventional technology in which an access network device can generate a context list only by learning of an address of a packet header of a data packet, in the technical solution of this application, the access network device does not need to learn of an address of the packet header of the data packet. This implements quick generation of the context list.

In a possible design, the method further includes: The terminal obtains a context list from a core network element, where the context list includes a correspondence between a MAC address and a context identifier. In this way, the access network device may compress or decompress a data packet based on the context list.

In a possible design, the method further includes: The terminal generates an Ethernet data frame. The terminal extracts data of a preset quantity of bytes from a payload of the Ethernet data frame. The terminal sends the data of the preset quantity of bytes to the access network device. In this way, in a process of transmitting the Ethernet data frame, padding in the payload of the Ethernet data frame is not transmitted between the terminal and the access network device, and utilization of air interface resources is improved.

Optionally, the preset quantity of bytes is indicated by an application server or the core network element. Alternatively, the preset quantity of bytes is preconfigured.

According to a third aspect, a communications apparatus is provided. The communications apparatus includes: a communications module, configured to send an access list of a cell, where the access list of the cell includes at least one MAC address or group identifier, and the communications module is further configured to receive a message 3 sent by a terminal, where the message 3 includes a MAC address or a group identifier of the terminal; and a processing module, configured to determine, depending on whether the MAC address or the group identifier of the terminal exists in the access list of the cell, whether the terminal can access the cell.

In a possible design, the communications module is further configured to send common configuration information, where the common configuration information is used to indicate common configuration parameters of a working group, the common configuration information carries the group RNTI, there is a correspondence between the group RNTI and a group identifier of the working group, and the working group includes at least one terminal.

In a possible design, the communications module is further configured to: receive authentication request information sent by the terminal; if the terminal is a first-type terminal, send the authentication request information to a control center, and receive authentication result information sent by the control center; if the terminal is a second-type terminal, and a service requested by the terminal is a first-type service, send the authentication request information to a control center, and receive authentication result information sent by the control center; or if the terminal is a second-type terminal and a service requested by the terminal is a second-type service, send the authentication request information to a core network element, and receive authentication result information sent by the core network element; and send the authentication result information to the terminal.

In a possible design, the communications module is further configured to: send the MAC address of the terminal to a target control node, where the target control node is a control node configured to manage the terminal; and send a MAC address of the target control node to the terminal.

In a possible design, the communications module is further configured to: send, to the terminal, logical channel identifiers corresponding to at least two target control nodes; or allocate at least two RNTIs to the terminal, where each RNTI corresponds to one target control node.

In a possible design, the communications module is further configured to: obtain the MAC address of the terminal and a MAC address of a control node. The processing module is further configured to generate a context list, where the context list includes a correspondence between the MAC address of the terminal and a context identifier, and a correspondence between the MAC address of the control node and a context identifier.

In a possible design, the communications module is further configured to obtain a context list from a core network element, where the context list includes a correspondence between a MAC address and a context identifier.

In a possible design, the processing module is further configured to extract data of a preset quantity of bytes from a payload of an Ethernet data frame; and the communications module is further configured to send the data of the preset quantity of bytes to the terminal.

Optionally, the preset quantity of bytes is indicated by an application server or the core network element. Alternatively, the preset quantity of bytes is preconfigured.

According to a fourth aspect, a communications apparatus is provided. The communications apparatus includes a processor and a memory. The memory is configured to store computer-executable instructions. When the communications apparatus runs, the processor executes the computer-executable instructions stored in the memory, so that the communications apparatus performs the network access method according to any design of the first aspect.

According to a fifth aspect, a communications apparatus is provided. The communications apparatus includes a processor. The processor is configured to: be coupled to a memory, read instructions in the memory, and implement the network access method according to any design of the first aspect based on the instructions.

According to a sixth aspect, a computer-readable storage medium is provided. The computer-readable storage medium stores instructions, and when the instructions are run, the network access method according to any design of the first aspect is performed.

According to a seventh aspect, a computer program product including instructions is provided. When the computer program product runs, the network access method according to any design of the first aspect is performed.

Optionally, the communications apparatus provided in the third aspect, the fourth aspect, or the fifth aspect may be an access network device, or an apparatus in an access network device, for example, a chip, a chip system, or a circuit structure. This is not limited in this application.

According to an eighth aspect, a chip system is provided. The chip system includes a processor, configured to support an access network device in implementing a function of the network access method according to any design of the first aspect. In a possible design, the chip system further includes a memory. The memory is configured to store program instructions and data that are necessary for the access network device. The chip system may include a chip, or may include a chip and another discrete device.

For technical effects brought by any one of the designs of the fourth aspect to the eighth aspect, refer to technical effects brought by the different designs of the first aspect. Details are not described herein again.

According to a ninth aspect, a communications apparatus is provided. The communications apparatus includes: a communications module, configured to receive an access list of a cell sent by an access network device, where the access list of the cell includes at least one MAC address or group identifier; and a processing module, configured to detect whether a MAC address or a group identifier of a terminal exists in the access list of the cell, where the communications module is further configured to: when the processing module determines that the MAC address or the group identifier of the terminal exists in the access list of the cell, send a message 3 to the access network device, to access the cell, where the message 3 includes the MAC address or the group identifier of the terminal.

In a possible design, the communications module is further configured to: receive, based on a group RNTI of the terminal, common configuration information sent by the access network device, where the common configuration information is used to indicate common configuration parameters of a working group, the common configuration information carries the group RNTI, there is a correspondence between the group RNTI and a group identifier of the working group, and the working group includes at least one terminal.

In a possible design, the communications module is further configured to: if the terminal is a first-type terminal, by using the access network device, send authentication request information to a control center, and receive authentication result information sent by the control center; if the terminal is a second-type terminal, and a service requested by the terminal is a first-type service, by using the access network device, send authentication request information to a control center, and receive authentication result information sent by the control center; or if the terminal is a second-type terminal and a service requested by the terminal is a second-type service, by using the access network device, send authentication request information to a core network element, and receive authentication result information sent by the core network element.

In a possible design, the communications module is further configured to: after the terminal accesses a cell, receive a MAC address of a target control node sent by the access network device, where the target control node is a control node configured to manage the terminal.

In a possible design, the communications module is further configured to: receive logical channel identifiers corresponding to at least two target control nodes sent by the access network device; or obtain at least two RNTIs, where each RNTI corresponds to one target control node.

In a possible design, the communications module is further configured to obtain a context list from the access network device, where the context list includes a correspondence between the MAC address of the terminal and a context identifier, and a correspondence between a MAC address of a control node and a context identifier.

In a possible design, the communications module is further configured to obtain a context list from a core network element, where the context list includes a correspondence between a MAC address and a context identifier.

In a possible design, the processing module is further configured to extract data of a preset quantity of bytes from a payload of an Ethernet data frame; and the communications module is further configured to send the data of the preset quantity of bytes to the access network device.

Optionally, the preset quantity of bytes is indicated by an application server or the core network element. Alternatively, the preset quantity of bytes is preconfigured.

According to a tenth aspect, a communications apparatus is provided. The communications apparatus includes a processor and a memory. The memory is configured to store computer-executable instructions. When the communications apparatus runs, the processor executes the computer-executable instructions stored in the memory, so that the communications apparatus performs the network access method according to any design of the second aspect.

According to an eleventh aspect, a communications apparatus is provided. The communications apparatus includes a processor. The processor is configured to: be coupled to a memory, read instructions in the memory, and implement the network access method according to any design of the second aspect based on the instructions.

Optionally, the communications apparatus provided in the ninth aspect, the tenth aspect, or the eleventh aspect may be a terminal, or an apparatus in a terminal, for example, a chip, a chip system, or a circuit structure. This is not limited in this application.

According to a twelfth aspect, a computer-readable storage medium is provided. The computer-readable storage medium stores instructions, and when the instructions are run, the network access method according to any design of the second aspect is performed.

According to a thirteenth aspect, a computer program product including instructions is provided. When the computer program product runs, the network access method according to any design of the second aspect is performed.

According to a fourteenth aspect, a chip system is provided. The chip system includes a processor, configured to support a terminal in implementing a function of the network access method according to any design of the second aspect. In a possible design, the chip system further includes a memory. The memory is configured to store program instructions and data that are necessary for the terminal. The chip system may include a chip, or may include a chip and another discrete device.

For technical effects brought by any one of the designs of the ninth aspect to the fourteenth aspect, refer to technical effects brought by different designs of the second aspect. Details are not described herein again.

According to a fifteenth aspect, a communications system is provided. The communications system includes an access network device and a terminal. The access network device is configured to perform the network access method according to any design of the first aspect, and the terminal is configured to perform the network access method according to any design of the second aspect.

For technical effects of the fifteenth aspect, refer to related descriptions of the technical effects of the first aspect or the second aspect. Details are not described herein again.

### BRIEF DESCRIPTION OF DRAWINGS

FIG. 1 is a schematic diagram of a communications system with an architecture in which a control node sinks according to an embodiment of this application;
FIG. 2 is a schematic structural diagram of an access network device and a terminal according to an embodiment of this application;
FIG. 3 is a flowchart of a network access method according to an embodiment of this application;
FIG. 4 is a flowchart of a configuration method according to an embodiment of this application;
FIG. 5 is a flowchart of an authentication method according to an embodiment of this application;
FIG. 6 is a flowchart of a data transmission method according to an embodiment of this application;
FIG. 7 is a flowchart of another data transmission method according to an embodiment of this application;
FIG. 8 is a flowchart of another data transmission method according to an embodiment of this application;
FIG. 9 is a flowchart of another data transmission method according to an embodiment of this application;
FIG. 10 is a flowchart of another data transmission method according to an embodiment of this application;
FIG. 11 is a schematic diagram of a protocol stack according to an embodiment of this application;
FIG. 12 is a schematic diagram of another protocol stack according to an embodiment of this application;
FIG. 13 is a schematic diagram of a frame structure of an Ethernet data frame in the 802.3 standard;
FIG. 14 is a flowchart of another data transmission method according to an embodiment of this application;
FIG. 15 is a flowchart of another data transmission method according to an embodiment of this application;
FIG. 16 is a flowchart of another data transmission method according to an embodiment of this application;
FIG. 17 is a schematic structural diagram of a terminal according to an embodiment of this application; and
FIG. 18 is a schematic structural diagram of an access network device according to an embodiment of this application.

### DESCRIPTION OF EMBODIMENTS

In the descriptions of this application, unless otherwise specified, "/" means "or". For example, A/B may represent A or B. The term "and/or" in this specification describes only an association relationship for describing associated objects and represents that there may be three relationships. For example, A and/or B may represent the following three cases: Only A exists, both A and B exist, and only B exists. In addition, "at least one" means one or more, and "a plurality of' means two or more. Words such as "first" and "second" do not limit a quantity and an execution sequence, and the words such as "first" and "second" do not indicate a definite difference.

It should be noted that in this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word "example", "for example", or the like is intended to present a related concept in a specific manner.

In addition, a network architecture and a service scenario that are described in embodiments of this application are intended to describe the technical solutions in the embodiments of this application more clearly, and do not constitute a limitation on the technical solutions provided in the embodiments of this application. A person of ordinary skill in the art may learn that with evolution of the network architecture and emergence of a new service scenario, the technical solutions provided in the embodiments of this application are also applicable to similar technical problems.

The technical solutions provided in the embodiments of this application may be applied to various communications systems, for example, a long term evolution (long term evolution, LTE) communications system, a new radio (new radio, NR) communications system that uses a 5th generation (5th generation, 5G) communications technology, a future evolved system, or a plurality of converged communications systems. The technical solutions provided in this application may be applied to a plurality of application scenarios, for example, machine to machine (machine to machine, M2M) communication, macro-micro communication, enhanced mobile broadband (enhance mobile broadband, eMBB) communication, ultra-reliable low-latency communication (ultra reliable & low latency communication, uRLLC), and massive machine-type communications (massive machine type communication, mMTC). The scenarios may include but are not limited to a scenario of communication between terminals, a scenario of communication between access network devices, a scenario of communication between an access network device and a terminal, and the like. The following provides descriptions by using an example in which the technical solutions are applied to the scenario of communication between an access network device and a terminal.

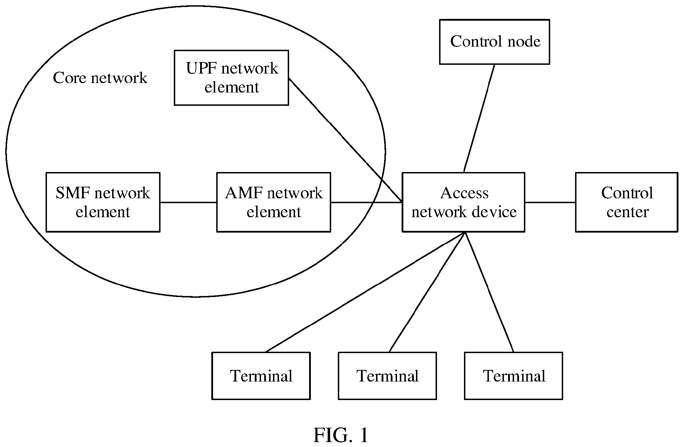

FIG. 1 is a schematic diagram of a communications system with an architecture in which a control node sinks according to an embodiment of this application. The communications system may include a terminal, a control center, a control node, a core network, and an access network device.

Terminals may be classified into a first-type terminal and a second-type terminal. The first-type terminal may have another name, for example, an industrial terminal. The second-type terminal may also have another name, for example, a common terminal. This is not limited in this embodiment of this application. A difference between the first-type terminal and the second-type terminal lies in that the first-type terminal is used in the industrial field, and the first-type terminal is specially configured to perform an industrial production service, an industrial control service, and the like. For example, the first-type terminal is an operation arm, a machine tool, a lathe, or the like. The second-type terminal may be any handheld device (for example, a mobile phone) having a communication function, a vehicle-mounted device (for example, a vehicle-mounted navigation system), a wearable device (for example, a smart band), or a computer.

The control center is responsible for managing an entire industrial control network, and has functions of exchanging industrial control data with a terminal and delivering industrial control instructions to the terminal. As shown in FIG. 1, the control center may be disposed on an access network side, to reduce a delay of exchanging data with the terminal. The control center may alternatively be disposed in a public network.

The control node is configured to manage at least one working group. It may be understood that one working group includes at least one terminal. Each working group has a corresponding group identifier. In other words, a group identifier is used to identify a working group. The control node is connected to a base station in a wired manner or a wireless manner. For example, the control node may be a programmable logic controller (programmable logic controller, PLC) or a gateway device.

The access network device may be a base station. The base station may include various types of base stations, for example, a micro base station (which is also referred to as a small cell), a macro base station, a relay station, and an access point. This is not specifically limited in this embodiment of this application. In this embodiment of this application, the base station may be a base transceiver station (base transceiver station, BTS) in global system for mobile communications (global system for mobile communication, GSM) or code division multiple access (code division multiple access, CDMA), a NodeB (NodeB) in wideband code division multiple access (wideband code division multiple access, WCDMA), an evolved NodeB (evolutional NodeB, eNB or eNodeB) in LTE, an eNB in the internet of things (internet of things, IoT) or the narrowband internet of things (narrow band-internet of things, NB-IoT), or a base station in a future 5G mobile communications network or a future evolved public land mobile network (public land mobile network, PLMN). This is not limited in this embodiment of this application.

Core network elements in the core network include an access and mobility management function (access and mobility management function, AMF) network element, a session management function (session management function, SMF) network element, and a user plane function (User Plane Function, UPF) network element. The AMF network element may be configured to perform connection management, mobility management, registration management, access authentication and authorization, reachability management, security context management, SMF network element selection, and the like. The SMF network element may be configured to perform session management such as session establishment, modification, and release, UPF network element selection and control, service and session continuity (service and session continuity) mode selection, and a roaming service. The UPF network element may be configured to process an event related to a user plane, for example, transmit or route a data packet, detect a data packet, report a service volume, process quality of service (quality of service, QoS), perform lawful interception, and store a downlink data packet.

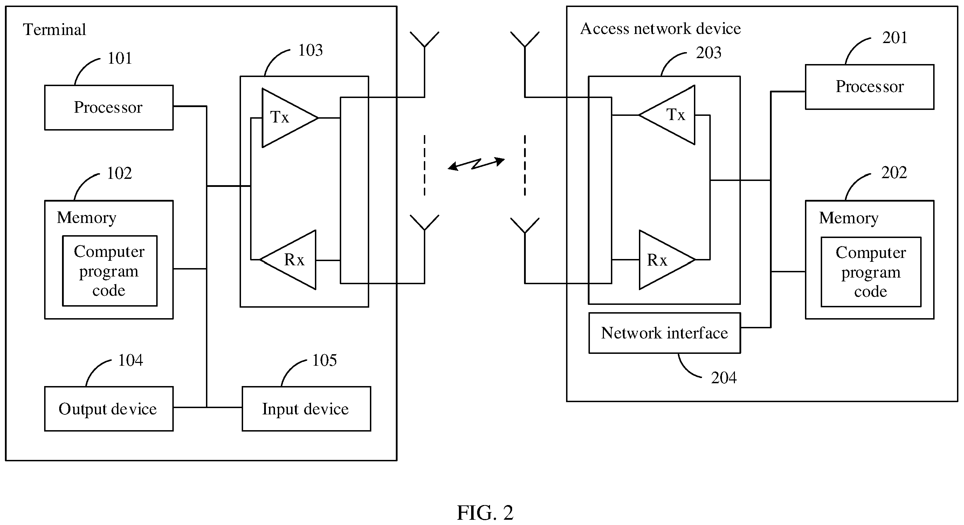

FIG. 2 is a schematic diagram of a hardware structure of an access network device and a terminal according to an embodiment of this application.

The terminal includes at least one processor 101, and optionally, further includes at least one memory 102 and at least one transceiver 103. Optionally, the terminal may further include an output device 104 and an input device 105.

The processor 101, the memory 102, and the transceiver 103 are connected through a bus. The processor 101 may be a general-purpose central processing unit (central processing unit, CPU), a microprocessor, an application-specific integrated circuit (application-specific integrated circuit, ASIC), or one or more integrated circuits configured to control program execution of the solutions of this application. The processor 101 may further include a plurality of CPUs, and the processor 101 may be a single-core (single-CPU) processor or a multi-core (multi-CPU) processor. The processor herein may refer to one or more devices, circuits, and/or processing cores configured to process data (for example, computer program instructions).

The memory 102 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used to carry or store expected program code in a form of an instruction or a data structure and that can be accessed by a computer. This is not limited in this embodiment of this application. The memory 102 may exist independently, and is connected to the processor 101 through the bus. Alternatively, the memory 102 may be integrated with the processor 101. The memory 102 is configured to store application program code for performing the solutions in this application, and the processor 101 controls the execution. The processor 101 is configured to execute the computer program code stored in the memory 102, to implement a method provided in the embodiments of this application.

The transceiver 103 may use any apparatus such as a transceiver, and is configured to communicate with another device or a communications network such as an Ethernet, a radio access network (radio access network, RAN), or a wireless local area network (wireless local area networks, WLAN). The transceiver 103 includes a transmitter Tx and a receiver Rx.

The output device 104 communicates with the processor 101, and may display information in a plurality of manners. For example, the output device 104 may be a liquid crystal display (liquid crystal display, LCD), a light emitting diode (light emitting diode, LED) display device, a cathode ray tube (cathode ray tube, CRT) display device, a projector (projector), or the like. The input device 105 communicates with the processor 101, and may receive an input of a user in a plurality of manners. For example, the input device 105 may be a mouse, a keyboard, a touchscreen device, a sensor device, or the like.

The access network device includes at least one processor 201. Optionally, the access network device further includes at least one memory 202, at least one transceiver 203, and at least one network interface 204. The processor 201, the memory 202, the transceiver 203, and the network interface 204 are connected through a bus. The network interface 204 is configured to connect to a core network device through a link (for example, an S1 interface), or connect to a network interface of an access network device through a wired or wireless link (for example, an X2 interface) (which is not shown in the figure). This is not specifically limited in this embodiment of this application. In addition, for related descriptions of the processor 201, the memory 202, and the transceiver 203, refer to the descriptions of the processor 101, the memory 102, and the transceiver 103 in the terminal. Details are not described herein again.

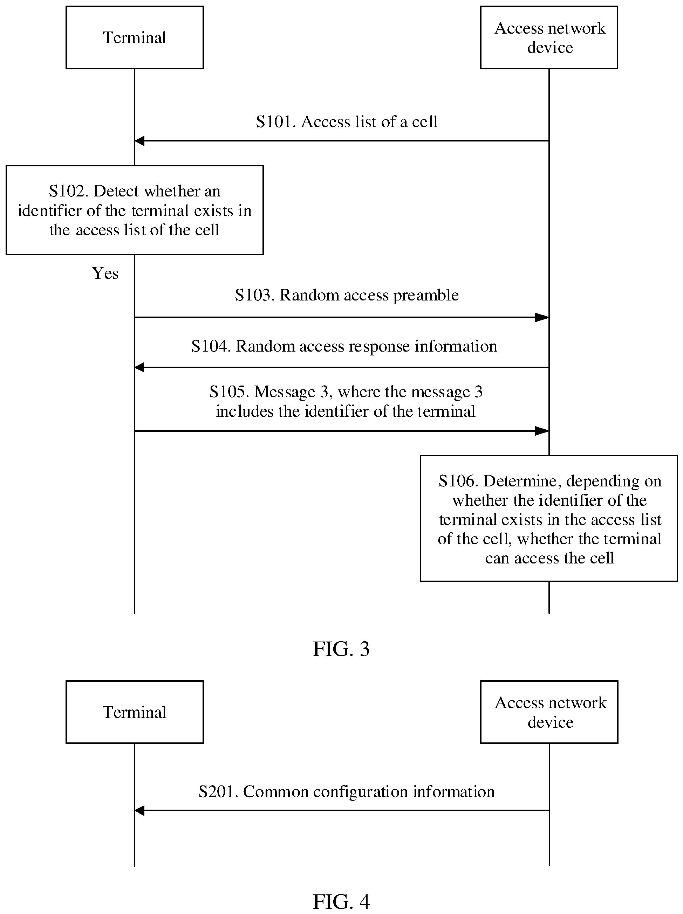

FIG. 3 shows a network access method according to an embodiment of this application. The method includes the following steps.

S101. An access network device sends an access list of a cell, so that a terminal receives the access list of the cell.

The access list of the cell is used to indicate a terminal that has permission to access the cell. The access list of the cell includes an identifier of at least one terminal. Optionally, the access list of the cell is preconfigured.

For example, an identifier of the terminal includes a MAC address, a group identifier, or a name of the terminal. This is not limited in this embodiment of this application. It should be noted that specific implementations of the MAC address and the group identifier are not limited in this embodiment of this application. For example, the MAC address may be represented in a form of a mask, or a part of fields of the MAC address are represented by using a wildcard character. For example, the group identifier may be a MAC address of a control node that manages the working group, or the group identifier may be represented by using a character string.

In an optional implementation, the access network device sends the access list of the cell in a broadcast manner, so that a terminal within a coverage area of the cell can learn of the access list of the cell.

Optionally, before the access network device sends the access list of the cell, the access network device first broadcasts type information of the cell, where the type information of the cell is used to indicate a type of the cell. In this embodiment of this application, the type of the cell includes a first-type cell, a second-type cell, and a third-type cell. The first-type cell may be referred to as a type A cell, and the first-type cell supports access of a first-type terminal and a second-type terminal. The second-type cell may be referred to as a type B cell, and the second-type cell supports only access of the first-type terminal. The third-type cell may be referred to as a public-network cell, and the third-type cell supports only access of the second-type terminal. In this way, the terminal may determine, based on a type of the terminal and the type of the cell, whether the terminal is allowed to access the cell, to prevent the terminal from initiating an unnecessary random access procedure, thereby reducing signaling overheads.

Optionally, if the cell is the first-type cell or the second-type cell, the access network device broadcasts the access list of the cell. If the cell is the third-type cell, the access network device does not need to broadcast the access list of the cell.

S102. The terminal detects whether the identifier of the terminal exists in the access list of the cell.

Optionally, if the identifier of the terminal exists in the access list of the cell, when the terminal needs to access the cell, the terminal may initiate random access to the access network device. In other words, the terminal performs the following steps S103 to S105, to access the cell.

It may be understood that, if the identifier of the terminal does not exist in the access list of the cell, it indicates that the cell does not support a service of the terminal. Therefore, the terminal does not need to initiate a random access procedure. In other words, the terminal does not need to perform the following steps S103 to S105.

S103. The terminal sends a random access preamble to the access network device, so that the access network device receives the random access preamble.

Optionally, there is a correspondence between a time-frequency resource occupied by a physical random access channel (physical random access channel, PRACH) and a type of a terminal; and/or there is a correspondence between the random access preamble and a type of a terminal. Therefore, PRACHs corresponding to different types of terminals occupy different time-frequency resources, and/or random access preambles used by different types of terminals are different. In this embodiment of this application, the access network device sends, in a broadcast manner, the correspondence between the time-frequency resource occupied by the PRACH and the type of the terminal, and/or the correspondence between the random access preamble and the type of the terminal. The terminal sends a corresponding random access preamble based on the type of the terminal by using a corresponding time-frequency resource. In this way, after receiving the random access preamble sent by the terminal, the access network device may determine the type of the terminal based on the time-frequency resource occupied by the PRACH that carries the random access preamble and/or based on the random access preamble. Therefore, the access network device can provide a corresponding service based on the type of the terminal, to meet differentiated requirements of different types of terminals.

Optionally, there is a correspondence between a time-frequency resource occupied by a PRACH and a type of a service; and/or there is a correspondence between a random access preamble and a type of a service. Therefore, PRACHs corresponding to different types of services occupy different time-frequency resources, and/or random access preambles corresponding to different types of services are different. In this embodiment of this application, the access network device sends, in a broadcast manner, the correspondence between the time-frequency resource occupied by the PRACH and the type of the service, and/or the correspondence between the random access preamble and the type of the service. The terminal sends a corresponding random access preamble based on the type of the service by using a corresponding time-frequency resource. In this way, after receiving the random access preamble sent by the terminal, the access network device may determine, based on the time-frequency resource occupied by the PRACH that carries the random access preamble and/or based on the random access preamble, the type of the service used by the terminal. Therefore, the access network device can provide a corresponding service based on the type of the service, to meet differentiated requirements of different types of services.

S104. The access network device sends random access response information to the terminal, so that the terminal receives the random access response information.

The random access response information is used to allocate an RNTI to the terminal. The random access response information is further used to allocate an uplink time-frequency resource used to transmit a message 3.

In this embodiment of this application, to reduce time consumed by a random access procedure corresponding to the first-type terminal or an industrial control service, and meet a delay requirement of the industrial control service, a quantity of time units occupied by a random access response time window configured by the access network device for the first-type terminal or the industrial control service is less than a preset value. It should be noted that the random access response time window starts from a time unit in which the terminal sends the random access preamble, and lasts for n preconfigured time units, where n is a positive integer. The terminal monitors a physical downlink control channel (physical downlink control channel, PDCCH) within the random access response time window, to receive corresponding random access response information. It should be noted that the time unit is a slot, a subframe, or a symbol.

S105. The terminal sends the message 3 to the access network device, so that the access network device receives the message 3. The message 3 includes the identifier of the terminal.

The message 3 is used to determine whether the terminal can access the cell. It may be understood that the message 3 is merely an example name, and does not constitute any limitation.

Optionally, the identifier of the terminal included in the message 3 and the identifier of the terminal included in the access list of the cell are identifiers of a same type. For example, if the access list of the cell includes a MAC address of the terminal, the message 3 also includes a MAC address of the terminal. For another example, if the access list of the cell includes a group identifier of the terminal, the message 3 also includes a group identifier of the terminal.

S106. The access network device determines, depending on whether the identifier of the terminal exists in the access list of the cell, whether the terminal can access the cell.

In an optional implementation, when the identifier of the terminal exists in the access list of the cell, the access network device determines that the terminal can access the cell. Therefore, the access network device sends contention resolution (contention resolution) information to the terminal, and the RNTI allocated to the terminal takes effect, so that the terminal accesses the cell.

When the identifier of the terminal does not exist in the access list of the cell, the access network device determines that the terminal cannot access the cell, so that the access network device sends corresponding signaling to the terminal to reject access of the terminal to the cell.

Alternatively, when the identifier of the terminal does not exist in the access list of the cell, the access network device detects whether the terminal meets a preset rule. If the terminal meets the preset rule, the access network device allows the terminal to access the cell. If the terminal does not meet the preset rule, the access network device rejects access of the terminal to the cell. For example, the preset rule is any one or any combination of the following: (1) The terminal is the first-type terminal. (2) The terminal is the second-type terminal. Certainly, the preset rule may further include another rule. This is not limited in this embodiment of this application.

Optionally, after the terminal accesses the cell, the access network device establishes and stores a correspondence between the MAC address of the terminal and the RNTI of the terminal.

Based on the technical solution shown in FIG. 3, the access list of the cell is used to indicate terminals that can access the cell. To be specific, when the identifier of the terminal exists in the access list of the cell, normal working of the terminal can be ensured in the cell. Therefore, the access network device determines, depending on whether the identifier of the terminal exists in the access list of the cell, whether the terminal can access the cell. This can avoid a case in which the terminal cannot work normally after accessing the cell.

Optionally, FIG. 4 shows a configuration method according to an embodiment of this application. The configuration method includes the following steps.

S201. An access network device sends common configuration information, so that a terminal receives the common configuration information.

The common configuration information is used to indicate common configuration parameters of a working group. It should be noted that the configuration parameters include at least one of the following: an RB index, an SDAP parameter, a PDCP parameter, and an RLC parameter.

In addition, the common configuration information carries a group (group) RNTI. There is a correspondence between the group RNTI and a group identifier of the working group. In other words, the group RNTI is used to identify the working group. Optionally, the access network device may notify, in a broadcast manner, the group RNTI corresponding to the working group. Alternatively, the access network device sends higher layer signaling to the terminal, so that the terminal learns of the group RNTI of the working group to which the terminal belongs.

In an implementation, the common configuration information may further include a configuration parameter corresponding to each terminal in the working group.

Optionally, to reduce signaling overheads caused by air interface configuration, when the terminal is powered off, the terminal saves some configuration parameters. After the terminal is powered on and accesses a cell, the terminal uses the previously stored configuration parameters to perform a service. The configuration parameters that are specifically saved when the terminal is powered off may be specified by the access network device by sending indication information, or specified in a protocol.

Optionally, to reduce signaling overheads caused by air interface configuration, default values of configuration parameters in various scenarios are specified in a protocol. In this way, after accessing a cell, the terminal directly uses, according to a current scenario, corresponding configuration parameters to perform a service. Certainly, the access network device may deliver indication information to the terminal, to change values of the configuration parameters from the default values to other values.

Based on the configuration method shown in FIG. 4, the access network device indicates the common configuration parameters to all terminals in the working group by sending the common configuration information. In this way, the access network device does not need to send a plurality of pieces of information to indicate a common configuration parameter to each terminal in the working group. This reduces signaling overheads.

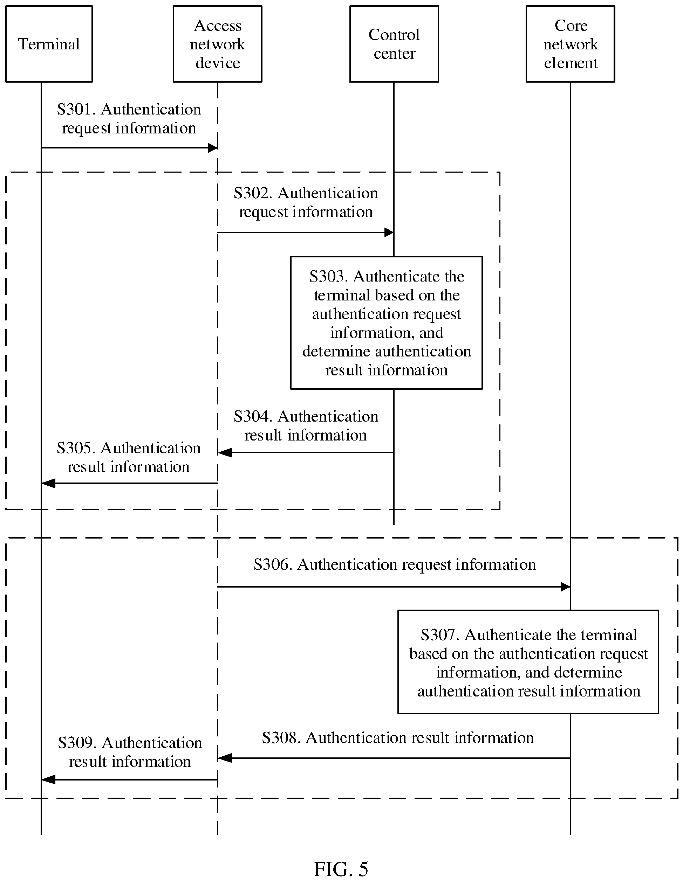

After a terminal accesses a cell by using the technical solution shown in FIG. 3, as shown in FIG. 5, an embodiment of this application provides an authentication method, to ensure security of a communications network. The method includes the following steps.

S301. An access network device receives authentication request information sent by a terminal.

The authentication request information includes: a network address, a key, and/or a temporary mobile subscriber identity (S-temporary mobile subscriber identity, S-TMSI). The network address includes an internet protocol (internet protocol, IP) address and/or a MAC address.

Optionally, if the terminal is a second-type terminal, the authentication request information further includes a service type identifier, and the service type identifier is used to indicate a type of a service requested by the terminal. In this embodiment of this application, the type of the service includes a first-type service and a second-type service. For example, the first-type service is an industrial control service, and the second-type service is a non-industrial control service.

In an implementation, after receiving the authentication request information sent by the terminal, the access network device first determines a type of the terminal. If the terminal is a first-type terminal, the access network device performs the following steps S302 to S305. If the terminal is a second-type terminal, the access network device determines, based on the service type identifier in the authentication request information, a type of a service requested by the second-type terminal. If the service requested by the second-type terminal is the first-type service, the access network device performs the following steps S302 to S305. If the service requested by the second-type terminal is the second-type service, the access network device performs the following steps S306 to S309.

S302. The access network device sends the authentication request information to a control center.

S303. The control center authenticates the terminal based on the authentication request information, and determines authentication result information.

The authentication result information is used to indicate whether authentication on the terminal succeeds or fails.

It should be noted that for specific implementation of step S303, refer to a conventional technology. Details are not described herein in this embodiment of this application.

S304. The access network device receives the authentication result information sent by the control center.

S305. The access network device sends the authentication result information to the terminal.

S306. The access network device sends the authentication request information to a core network element.

For example, the core network element may be an AMF network element. This is not limited in this embodiment of this application.

S307. The core network element authenticates the terminal based on the authentication request information, and determines authentication result information.

It should be noted that for specific implementation of step S307, refer to a conventional technology. Details are not described herein in this embodiment of this application.

S308. The access network device receives the authentication result information sent by the core network element.

S309. The access network device sends the authentication result information to the terminal.

In addition, it should be noted that the second-type terminal may simultaneously request the first-type service and the second-type service. In this case, the access network device may separately send the authentication request information to the control center and the core network element, to determine whether the second-type terminal has permission to perform a service of a corresponding type.

Based on the technical solution shown in FIG. 5, the access network device forwards the authentication request information of the terminal to a corresponding device (for example, the control center or the core network element) based on the type of the terminal and/or the type of the service requested by the terminal, so that an authentication procedure of the terminal can be smoothly completed. This ensures the security of the communications network.

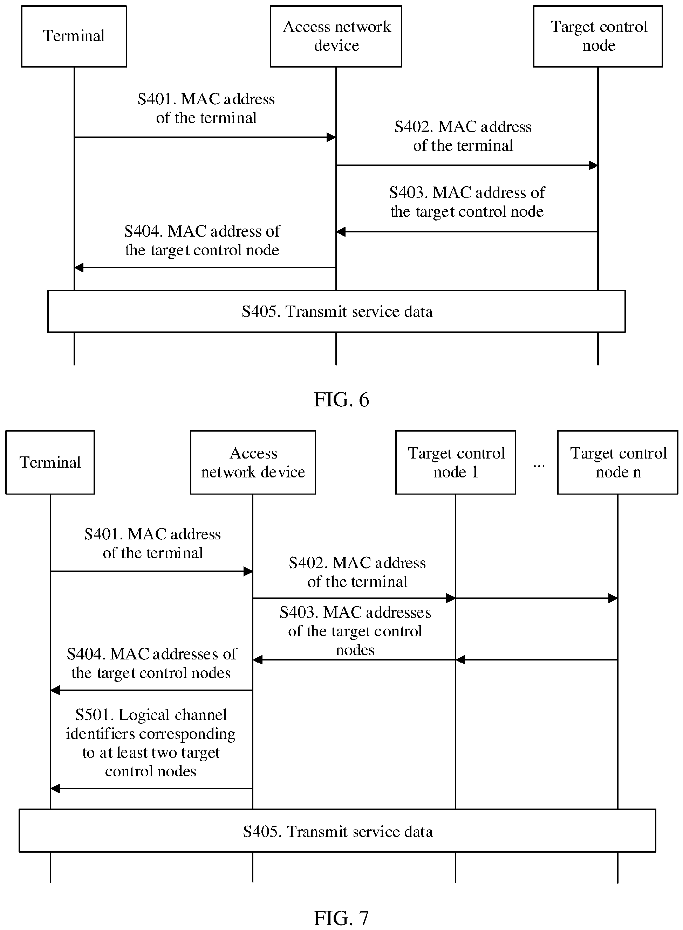

After a terminal accesses a cell by using the technical solution shown in FIG. 3, as shown in FIG. 6, an embodiment of this application provides a data transmission method. The method includes the following steps.

S401. An access network device obtains a MAC address of the terminal.

With reference to FIG. 3, if the message 3 includes the MAC address of the terminal, the access network device obtains the MAC address of the terminal from the message 3. If the message 3 does not include the MAC address of the terminal, after the terminal accesses the cell, the terminal reports the MAC address of the terminal to the access network device, so that the access network device obtains the MAC address of the terminal.

S402. The access network device sends the MAC address of the terminal to a target control node, so that the target control node obtains the MAC address of the terminal.

The target control node is a control node configured to manage the terminal. Alternatively, the target control node is a control node configured to manage a working group to which the terminal belongs.

It should be noted that a correspondence between a control node and working groups is preconfigured. In other words, working groups managed by a control node are preconfigured. Therefore, the access network device may determine the target control node based on the working group to which the terminal belongs.

Optionally, the access network device may obtain the group identifier of the terminal, to determine the working group to which the terminal belongs. With reference to FIG. 3, if the message 3 includes the group identifier of the terminal, the access network device obtains the group identifier of the terminal from the message 3. If the message 3 does not include the group identifier of the terminal, after the terminal accesses the cell, the terminal reports the group identifier to the access network device, so that the access network device obtains the group identifier of the terminal.

It should be noted that S402 is an optional execution step. To be specific, when the control node prestores a MAC address of each terminal in the working group managed by the control node, the access network device does not need to perform step S402.

S403. The access network device obtains a MAC address of the target control node.

The MAC address of the target control node is reported by the target control node to the access network device, or is preconfigured by an operation, administration, and maintenance (operation administration and maintenance, OAM) system in the access network device.

S404. The access network device sends the MAC address of the target control node to the terminal.

S405. The target control node transmits service data with the terminal.

Optionally, a specific implementation of step S405 may include one of the following cases.
Case 1: The target control node generates a first data packet, and sends the first data packet to the access network device. The access network device removes a destination address field and a source address field from a packet header of the first data packet, to generate a second data packet. Then, the access network device sends the second data packet to the terminal based on the destination address field in the packet header of the first data packet. The terminal adds a destination address field and a source address field to a packet header of the second data packet, writes the MAC address of the target control node corresponding to the terminal into the source address field, and writes the MAC address of the terminal into the destination address field, to restore the first data packet.
Case 2: The target control node generates a first data packet. Then, the target control node removes a source address field from a packet header of the first data packet, to generate a third data packet. The control node sends the third data packet to the access network device. The access network device removes a destination address field from a packet header of the third data packet, to generate a second data packet. The access network device sends the second data packet to the terminal based on the destination address field of the packet header of the third data packet. The terminal adds a destination address field and a source address field to a packet header of the second data packet, writes the MAC address of the target control node corresponding to the terminal into the source address field, and writes the MAC address of the terminal into the destination address field, to restore the first data packet.
Case 3: It is assumed that a plurality of communication tunnels are established between the control node and the access network device, and each communication tunnel corresponds to one terminal. In this case, the target control node generates a first data packet. Then, the target control node may remove a destination address field and a source address field in a packet header of the first data packet, to generate a second data packet. The control node determines, based on the destination address field of the packet header of the first data packet, a terminal that receives the first data packet, and sends the second data packet to the access network device by using a corresponding communication tunnel. The access network device determines, based on the communication tunnel for transmitting the second data packet, a terminal that receives the second data packet, and sends the second data packet to the terminal. The terminal adds a destination address field and a source address field to a packet header of the second data packet, writes the MAC address of the target control node corresponding to the terminal into the source address field, and writes a MAC address of the terminal into the destination address field, to restore the first data packet.
Case 4: An application layer of the terminal generates a first data packet. Then, an Ethernet adaptation layer of the terminal removes a destination address field and a source address field in a packet header of the first data packet, to generate a second data packet. An RAN layer of the terminal sends the second data packet to the access network device. The access network device adds a destination address field and a source address field to a packet header of the second data packet, writes the MAC address of the target control node corresponding to the terminal into the destination address field, and writes the MAC address of the terminal into the source address field, to restore the first data packet. The access network device sends the first data packet to the target control node corresponding to the terminal.
Case 5: The terminal generates a first data packet. Then, the terminal removes a destination address field and a source address field from a packet header of the first data packet, to generate a second data packet. The terminal sends the second data packet to the access network device. The access network device adds a source address field to a packet header of the second data packet, and writes the MAC address of the terminal into the source address field, to generate a third data packet. The access network device sends the third data packet to the target control node corresponding to the terminal. The target control node corresponding to the terminal adds a destination address field to a packet header of the third data packet, and writes the MAC address of the terminal into the destination address field, to restore the first data packet.
Case 6: It is assumed that a plurality of communication tunnels are established between the control node and the access network device, and each communication tunnel corresponds to one terminal. In this case, a terminal generates a first data packet. Then, the terminal removes a destination address field and a source address field from a packet header of the first data packet, to generate a second data packet. The terminal sends the second data packet to the access network device. The access network device sends, by using a communication tunnel corresponding to the terminal, the second data packet to the target control node corresponding to the terminal. The target control node corresponding to the terminal adds a destination address field and a source address field to the second data packet, writes the MAC address of the target control node into the destination address field, and writes a MAC address of the terminal into the source address field, to restore the first data packet.

Based on the technical solution shown in FIG. 6, after the terminal accesses the cell, the target control node and the terminal exchange respective MAC addresses by using the access network device, so that the service data can be transmitted between the target control node and the terminal based on the MAC address of the other party. In addition, in a data transmission process, the access network device, the terminal, or the target control node may compress a packet header of a data packet, to reduce transmission overheads.

It should be noted that the specific implementation shown in Case 3 or Case 6 may be alternatively applicable to a data transmission procedure between a UPF network element and the access network device. In other words, a plurality of communication tunnels are established between the UPF network element and the access network device, and each communication tunnel corresponds to one terminal. In this way, during downlink transmission, the UPF network element may remove a destination address field from a packet header of a first data packet, to generate a second data packet. The UPF network element determines, based on the destination address field in the packet header of the first data packet, a terminal that receives the data packet, and sends the second data packet to the access network device by using the communication tunnel corresponding to the terminal. The access network device determines, based on the communication tunnel for transmitting the second data packet, a terminal corresponding to the second data packet. During uplink transmission, the access network device may remove a destination address field from a packet header of a first data packet, to generate a second data packet. The access network device determines, based on the source address field in the packet header of the first data packet, a terminal that sends the first data packet, and sends the second data packet to the UPF network element by using a communication tunnel corresponding to the terminal. The UPF network element determines, based on the communication tunnel for transmitting the second data packet, the terminal corresponding to the second data packet.

If the terminal supports management of at least two target control nodes, as shown in FIG. 7, the data transmission method shown in FIG. 6 further includes S501.

S501. The access network device sends, to the terminal, logical channel identifiers corresponding to the at least two target control nodes.

A logical channel identifier corresponding to each target control node is preconfigured by the access network device.

Optionally, the logical channel identifier is used to determine a target control node that is used as a receiving end/transmitting end of a data packet. In other words, the logical channel identifier is used to determine a target control node that sends/receives a data packet. The following provides description with reference to specific implementation of step S405. During downlink transmission, Case 1 to Case 3 are used as examples. Because the second data packet does not include a source address field, when the terminal supports the management of the at least two target control nodes, to enable the terminal to determine a target control node that is used as a transmitting end of the second data packet, when the access network device sends the second data packet to the terminal, a MAC sub-header corresponding to the second data packet includes a logical channel identifier corresponding to the target control node that sends the second data packet. In this way, the terminal can determine, based on the logical channel identifier included in the MAC sub-header corresponding to the second data packet, the target control node that sends the second data packet. During uplink transmission, Case 4 to Case 6 are used as examples. Because the second data packet does not include a destination address field, when the terminal supports the management of the at least two target control nodes, to enable the terminal to determine a target control node that is used as a receiving end of the second data packet, when the terminal sends the second data packet to the access network device, a MAC sub-header corresponding to the second data packet includes a logical channel identifier corresponding to the target control node that receives the second data packet. In this way, the access network device can determine, based on the logical channel identifier included in the MAC sub-header corresponding to the second data packet, the target control node that receives the second data packet.

It should be noted that an execution sequence of step S501 is not limited in this embodiment of this application. For example, steps S501 and S404 may be simultaneously performed.

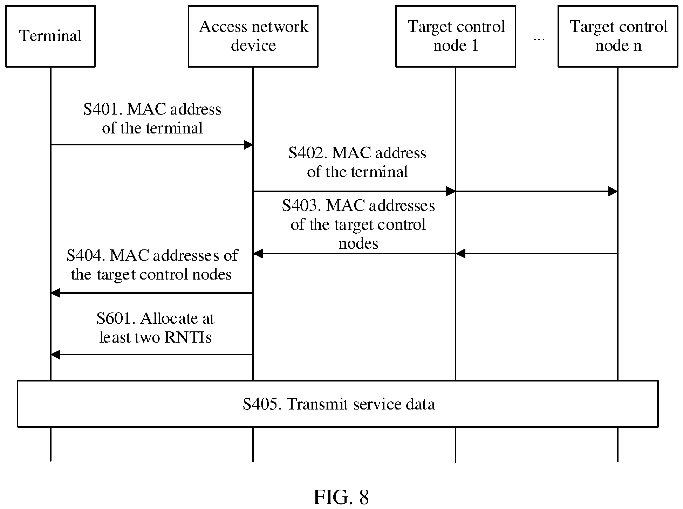

Alternatively, if the terminal supports management of at least two target control nodes, as shown in FIG. 8, the data transmission method shown in FIG. 6 further includes S601.

S601. The access network device allocates at least two RNTIs to the terminal, where each RNTI corresponds to one target control node.

Description is provided with reference to the technical solution shown in FIG. 3. It is assumed that the terminal supports management of n target control nodes. Because the access network device has allocated an RNTI to the terminal in a random access process, in a subsequent process, the access network device needs to allocate only n-1 RNTIs to the terminal, where n is an integer greater than 1.

It may be understood that, in a process of allocating the RNTIs to the terminal, the access network device notifies the terminal of a correspondence between an RNTI and a target control node.

For example, the RNTI is a C-RNTI.

Optionally, the RNTI is used to determine a target control node that is used as a receiving end/transmitting end of a data packet. In other words, the RNTI is used to determine a target control node that sends/receives a data packet. The following provides description with reference to specific implementation of step S405. During downlink transmission, Case 1 to Case 3 are used as examples. Because the second data packet does not include a source address field, when the terminal supports the management of the at least two target control nodes, to enable the terminal to determine a target control node that is used as a transmitting end of the second data packet, the access network device sends downlink control information. The downlink control information includes an RNTI corresponding to the target control node that sends the second data packet, and the downlink control information is used to schedule a time-frequency resource of a physical downlink shared channel. The access network device sends the second data packet on the time-frequency resource. In this way, the terminal can determine, based on the time-frequency resource that carries the second data packet and the RNTI included in the downlink control information that invokes the time-frequency resource, the target control node that sends the second data packet. During uplink transmission, Case 4 to Case 6 are used as examples. Because the second data packet does not include a destination address field, when the terminal supports the management of the at least two target control nodes, to enable the terminal to determine a target control node that is used as a receiving end of the second data packet, the terminal sends the second data packet on a time-frequency resource corresponding to the target control node that receives the second data packet. In this way, the access network device can determine, based on the time-frequency resource that carries the second data packet, the target control node that receives the second data packet. It may be understood that the time-frequency resource corresponding to the target control node that receives the second data packet is determined by using downlink control information delivered by the access network device, and the downlink control information includes an RNTI corresponding to the target control node that receives the second data packet. Alternatively, in another implementation, the terminal sends the second data packet to the access network device, and sends, in another physical layer manner such as in a scrambling manner or by using an orthogonal reference signal, an RNTI corresponding to the target control node that receives the second data packet.

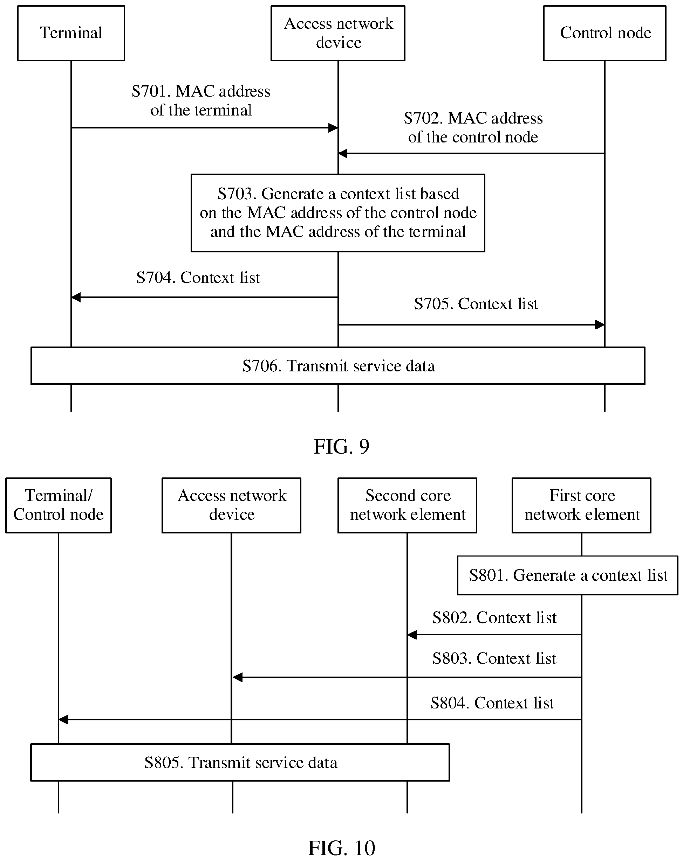

Optionally, FIG. 9 shows another data transmission method according to an embodiment of this application. The data transmission method includes the following steps.

S701. An access network device obtains a MAC address of a terminal.

For step S701, refer to step S401. For detailed descriptions, refer to the embodiment shown in FIG. 6. Details are not described herein again.

S702. The access network device obtains a MAC address of a control node.

For step S702, refer to step S403. For detailed descriptions, refer to the embodiment shown in FIG. 6. Details are not described herein again.

S703. The access network device generates a context list based on the MAC address of the control node and the MAC address of the terminal.

The context list is used to compress or decompress a data packet. The context list includes a correspondence between the MAC address of the control node and a context identifier, and a correspondence between the MAC address of the terminal and a context identifier. For example, the context list may be shown in Table 1.

**Table 1**

| Context identifier | MAC address |
|---|---|
| 0 | MAC address of a terminal 1 |
| 1 | MAC address of a terminal 2 |
| 2 | MAC address of a control node 1 |
| ... | ... |

S704. The access network device sends the context list to the terminal.

Optionally, the access network device may send a complete context list to the terminal. Alternatively, the access network device sends, to the terminal, a part that is in the context list and that is related to the terminal. For example, the part that is in the context list and that is related to the terminal includes: the MAC address of the terminal and the corresponding context identifier, and the MAC address of the control node that manages the terminal and the corresponding context identifier.

S705. The access network device sends the context list to the control node.

Optionally, the access network device may send the complete context list to the control node. Alternatively, the access network device sends, to the control node, the part that is in the context list and that is related to the control node. For example, the part that is in the context list and that is related to the control node includes: the MAC address of the control node and the corresponding context identifier, and a MAC address of each terminal in a working group managed by the control node and a corresponding context identifier.

It should be noted that an execution sequence of step S704 and step S705 is not limited in this embodiment of this application. For example, step S704 may be performed before step S705. Alternatively, step S705 may be first performed, and then step S704 is performed. Alternatively, steps S704 and S705 are simultaneously performed.

S706. The control node transmits service data with the terminal.

Optionally, specific implementation of step S706 includes at least one of the following cases.
Case 1: The control node generates a first data packet. The control node replaces a MAC address in a destination address field and a source address field in a packet header of the first data packet with a corresponding context identifier based on the context list, to compress the packet header of the first data packet and generate a second data packet. The control node sends the second data packet to the access network device. The access network device determines, based on a context identifier in a destination address field in a packet header of the second data packet, a terminal that receives the second data packet, and sends the second data packet to the terminal. The terminal replaces the context identifier in the destination address field and a source address field in the packet header of the second data packet with the corresponding MAC address based on the context list, to restore the first data packet.
Case 2: The control node generates a first data packet, and sends the first data packet to the access network device. The access network device replaces a MAC address in a destination address field and a source address field in a packet header of the first data packet with a corresponding context identifier, to compress the packet header of the first data packet and generate a second data packet. The access network device determines, based on a context identifier in a destination address field in a packet header of the second data packet, a terminal that receives the second data packet, and sends the second data packet to the terminal. The terminal replaces the context identifier in the destination address field and a source address field in the packet header of the second data packet with the corresponding MAC address based on the context list, to restore the first data packet.
Case 3: The terminal generates a first data packet. The terminal replaces a MAC address in a destination address field and a source address field in a packet header of the first data packet with a corresponding context identifier, to compress the packet header of the first data packet and generate a second data packet. The terminal sends the second data packet to the access network device. The access network device determines, based on a context identifier in a destination address field in a packet header of the second data packet, a control node that receives the second data packet, and sends the second data packet to the control node. The control node replaces the context identifier in the destination address field and a source address field in the packet header of the second data packet with the corresponding MAC address based on the context list, to restore the first data packet.
Case 4: The terminal generates a first data packet. The terminal replaces a MAC address in a destination address field and a source address field in a packet header of the first data packet with a corresponding context identifier, to compress the packet header of the first data packet and generate a second data packet. The terminal sends the second data packet to the access network device. The access network device replaces a context identifier in a destination address field and a source address field in a packet header of the second data packet with the corresponding MAC address based on the context list, to restore the first data packet. The access network device determines, based on the MAC address in the destination address field in the packet header of the first data packet, a control node that receives the first data packet, and sends the first data packet to the control node.

In this way, in a process of transmitting the service data between the control node and the terminal, the access network device, the control node, or the terminal may compress a packet header of a data packet based on the context list, to reduce data transmission overheads. In addition, if the context list further includes a correspondence between another parameter (for example, a group identifier or a virtual local area network identifier) and a context identifier, the access network device, the control node, or the terminal may compress a corresponding field in the data packet based on the context list, to reduce data transmission overheads.

Optionally, FIG. 10 shows another data transmission method according to an embodiment of this application. The data transmission method includes the following steps.

S801. A first core network element generates a context list.

For example, the first core network element is an SMF network element.

In an implementation, the first core network element generates the context list by learning a MAC address of a packet header of a data packet.

S802. The first core network element sends the context list to a second core network element.

For example, the second core network element is a UPF network element.

S803. The first core network element sends the context list to an access network device.

That the first core network element is the SMF network element is used as an example. The SMF network element sends the context list to the access network device by using an AMF network element. In other words, the SMF network element first sends the context list to the AMF network element, and then the AMF network element sends the context list to the access network device.

S804. The first core network element sends the context list to a terminal/control node.

That the first core network element is the SMF network element is used as an example. The SMF network element sends the context list to the terminal/control node by using the AMF network element and the access network device. In other words, the SMF network element first sends the context list to the AMF network element, the AMF network element then sends the context list to the access network device, and the access network device sends the context list to the terminal/control node.

It should be noted that an execution sequence of steps S802 to S804 is not limited in this embodiment of this application. For example, step S802 may be first performed, then step S803 is performed, and finally step S804 is performed. Alternatively, step S803 may be first performed, then step S804 is performed, and finally step S802 is performed.

S805. The second core network element transmits service data with the terminal/control node.

In an implementation, in a downlink transmission process, the second core network element performs header compression on a first data packet based on the context list, for example, replaces a MAC address in a destination address field and a source address field in a packet header of the data packet with a corresponding context identifier, to generate a second data packet. Then, the second core network element sends the second data packet to the terminal/control node by using the access network device. It should be noted that the second core network element or the access network device may be responsible for encryption processing on the second data packet.

Optionally, to improve data transmission reliability, the second core network element may send the second data packet to the terminal/control node by using a first access network device and a second access network device. For example, the first access network device may be an access network device in a primary cell, and the second access network device may be an access network device in a secondary cell. In this case, the second core network element may be responsible for encryption processing on the second data packet. Alternatively, the first access network device and the second access network device may be responsible for encryption processing on the second data packet.

It should be noted that, if the first access network device and the second access network device are responsible for encryption processing on the second data packet, the second core network element sends indication information to the first access network device and the second access network device. The indication information is used to directly or indirectly indicate a PDCP sequence number (sequence number, SN), so that the first access network device and the second access network device perform encryption processing on the second data packet by using a same PDCP SN. When the indication information is used to indirectly indicate the PDCP sequence number, the indication information includes but is not limited to a COUNT, a part of bits of a COUNT, and a COUNT added with an offset value. It should be noted that, the COUNT is a parameter used by the PDCP for integrity protection. The indication information may be used as a general packet radio service tunneling protocol (general packet radio service tunneling protocol, GTP) SN and placed in a GTP-U packet header, or may be placed outside a GTP packet.

Optionally, for a same service, the first access network device and the second access network device may use a same encryption/decryption algorithm and/or key, or use different encryption/decryption algorithms and/or keys.

Optionally, if the first access network device and the second access network device use different encryption/decryption algorithms and/or keys, the terminal is configured with two underlying processing entities. One underlying processing entity corresponds to the first access network device, and the other underlying processing entity corresponds to the second access network device. In the following, the underlying processing entity corresponding to the first access network device is briefly referred to as a first underlying processing entity, and the underlying processing entity corresponding to the second access network device is briefly referred to as a second underlying processing entity.

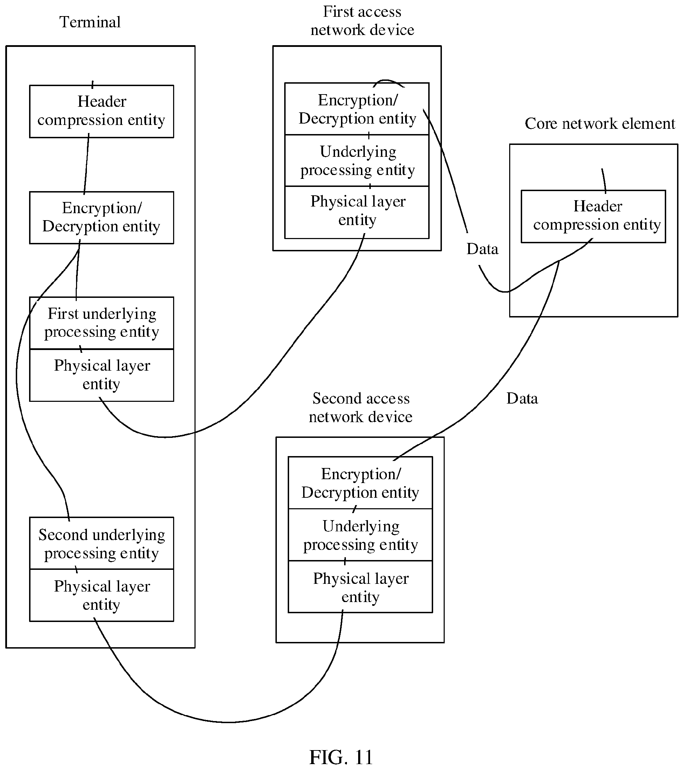

When the terminal is configured with two underlying processing entities, as shown in FIG. 11, the terminal is configured with an encryption/decryption entity. The encryption/decryption entity may use an encryption/decryption algorithm and a key that are used by the first access network device, or may use an encryption/decryption algorithm and a key that are used by the second access network device. In this way, during downlink transmission, for data uploaded by the first underlying processing entity, the encryption/decryption entity of the terminal decrypts the data by using the encryption/decryption algorithm and the key that are used by the first access network device. For data uploaded by the second underlying processing entity, the encryption/decryption entity of the terminal decrypts the data by using the encryption/decryption algorithm and the key that are used by the second access network device. During uplink transmission, the terminal first determines an access network device corresponding to an uplink time-frequency resource allocated to the terminal. If the uplink time-frequency resource allocated to the terminal corresponds to the first access network device, the encryption/decryption entity of the terminal encrypts a data packet by using the encryption/decryption algorithm and the key that are used by the first access network device, to generate ciphertext data. Then, the first underlying processing entity of the terminal sends the ciphertext data to the first access network device. If the uplink time-frequency resource allocated to the terminal corresponds to the second access network device, the encryption/decryption entity of the terminal encrypts a data packet by using the encryption/decryption algorithm and the key that are used by the second access network device, to generate ciphertext data. Then, the second underlying processing entity of the terminal sends the ciphertext data to the second access network device.

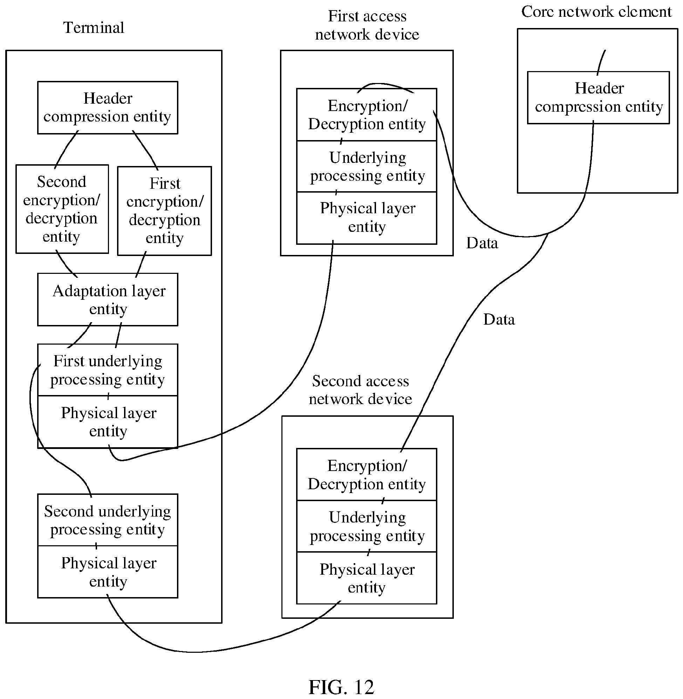

Alternatively, when the terminal is configured with two underlying processing entities, as shown in FIG. 12, the terminal is configured with two encryption/decryption entities. The first encryption/decryption entity corresponds to the first underlying processing entity, and uses the encryption/decryption algorithm and the key that are used by the first access network device. The second encryption/decryption entity corresponds to the second underlying processing entity, and uses the encryption/decryption algorithm and the key that are used by the second access network device. In this way, during downlink transmission, a first encryption/decryption entity in the terminal is responsible for decrypting data uploaded by the first underlying processing entity, and a second encryption/decryption entity in the terminal is responsible for decrypting data uploaded by the second underlying entity. During uplink transmission, for a same data packet, a first encryption/decryption entity in the terminal encrypts the data packet to generate first ciphertext data, and a second encryption/decryption entity in the terminal also encrypts the data packet to generate second ciphertext data. Then, if an uplink time-frequency resource allocated to the terminal corresponds to the first access network device, the terminal sends the first ciphertext data to the first access network device by using the first underlying processing entity. If an uplink time-frequency resource allocated to the terminal corresponds to the second access network device, the terminal sends the second ciphertext data to the second access network device by using the second underlying processing entity.

For example, the underlying processing entity may include a MAC layer entity, an RLC layer entity, and the like. This is not limited in this embodiment of this application. The encryption/decryption entity may be a PDCP layer entity. The header compression entity is further responsible for decompressing a data packet.

In addition, it should be noted that, if the MAC address in the packet header of the data packet does not have the corresponding context identifier in the context list, header compression cannot be performed on the data packet. For a data packet that is received from the access network device and on which header compression is not performed, the terminal/control node may use the following two processing manners: discarding the data packet, or delivering the data packet to an upper-layer protocol layer for processing. Optionally, a processing manner used by the terminal/control node may be indicated by the access network device, or may be preconfigured.

In an implementation, in an uplink transmission process, the terminal/control node performs header compression on the first data packet based on the context list, for example, replaces the MAC address in the destination address field and the source address field in the packet header of the data packet with the corresponding context identifier, to generate the second data packet. Then, the terminal/control node sends the second data packet to the second core network element by using the access network device.

Optionally, to improve data transmission reliability, the terminal/control node sends the second data packet to the second core network element by using the first access network device and the second access network device.

Based on the technical solution shown in FIG. 10, the first core network element generates a context list, and sends the context list to devices such as the access network device, the terminal, the control node, and the second core network element. In this way, in a data transmission process between the second core network element and the terminal/control node, a data packet may be compressed based on the context list, to reduce data transmission overheads.

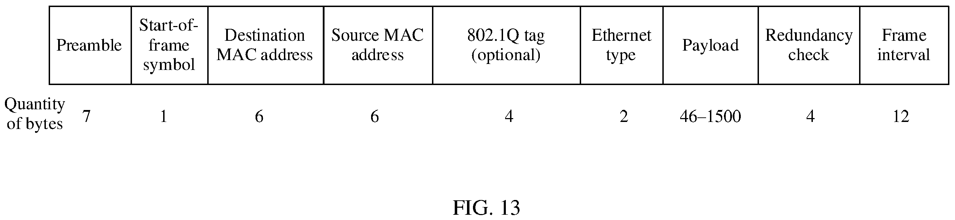

Currently, to implement conflict detection in a wired local area network, a standard defines a minimum length of a payload in an Ethernet data frame. In other words, the standard defines a minimum quantity of bytes occupied by a payload in an Ethernet data frame. FIG. 13 is a schematic diagram of a frame structure of an Ethernet data frame in the 802.3 standard. For example, a minimum length of a payload of the Ethernet data frame is 46 bytes. It should be noted that, if a length of a data packet received by an Ethernet processing layer is less than 46 bytes, the Ethernet processing layer generates a payload of the Ethernet data frame with a length of 46 bytes by using the data packet and padding. That is, the payload of the Ethernet data frame includes valid data, and may further include padding.

Because the padding is actually meaningless data, when the payload of the Ethernet data frame includes the padding, and the Ethernet data frame is transmitted between a base station and a terminal, a waste of air interface resources is caused.

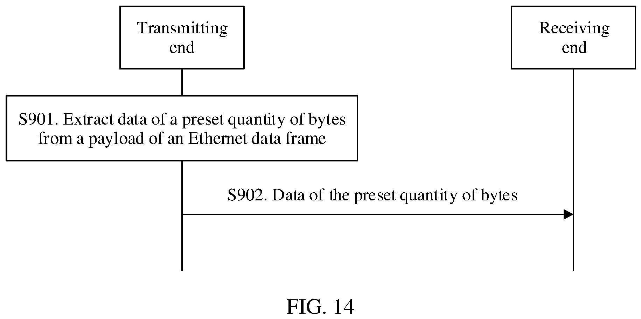

To resolve the foregoing technical problems, FIG. 14 shows another data transmission method according to an embodiment of this application. The data transmission method includes the following steps.

S901. A transmitting end extracts data of a preset quantity of bytes from a payload of an Ethernet data frame.

For example, the transmitting end may be an access network device, a terminal, a core network element, or a control node. This is not limited in this embodiment of this application.

Optionally, the Ethernet data frame is obtained by the transmitting end from another device connected to the transmitting end, or is generated by the transmitting end. For example, the transmitting end is the access network device, and the access network device obtains the Ethernet data frame from a core network element. For example, the transmitting end is the terminal, and the terminal generates the Ethernet data frame.

The preset quantity of bytes is a size of a data packet of a service. The preset quantity of bytes is preconfigured, the preset quantity of bytes is indicated by an application server, or the preset quantity of bytes is indicated by a core network element, for example, an SMF. For example, the transmitting end is the access network device. The access network device receives, by using a core network element, indication information sent by the application server, where the indication information is used to indicate the preset quantity of bytes. For example, the transmitting end is the terminal. The terminal receives, by using an access network device and a core network element, indication information sent by the application server, where the indication information is used to indicate the preset quantity of bytes.

It should be noted that the data packet of the service includes upper-layer data and an upper-layer protocol packet header. Therefore, the transmitting end may also obtain a size of the upper-layer data and a size of the upper-layer protocol packet header in different ways, and determine the size of the data packet of the service, that is, determine the preset quantity of bytes. This is not limited herein.

Because the data packet of the service is usually in a front part of the payload, and padding is usually in a rear part of the payload, the transmitting end extracts the data of the preset quantity of bytes starting from the first byte of the payload of the Ethernet data frame. That is, the transmitting end extracts the data packet of the service from the payload of the Ethernet data.

It should be noted that the payload may alternatively have another name, for example, a data part, a payload, or a valid payload. This is not limited in this embodiment of this application.

S902. The transmitting end sends the data of the preset quantity of bytes to a receiving end.

For example, the receiving end may be an access network device, a terminal, or a control node. For example, if the transmitting end is the access network device, the receiving end is the terminal or the control node. For another example, if the transmitting end is the terminal or the control node, the receiving end is the access network device.

In this embodiment of this application, after the receiving end receives the data of the preset quantity of bytes, the receiving end may restore the payload of the corresponding Ethernet data frame by using the data of the preset quantity of bytes and the padding.

In an industrial control system, the size of the data packet of the service is usually fixed, is usually 20 bytes to 30 bytes, and is less than a minimum length of the payload of the Ethernet data frame. In this way, the data packet of the service can be encapsulated into the payload of the Ethernet data frame by using the padding. Therefore, the transmitting end sends the payload of the entire Ethernet data frame to the receiving end. This is equivalent to that the transmitting end sends a part of useless data (namely, the padding) to the receiving end. Consequently, air interface resources are wasted. However, by using the technical solution shown in FIG. 14, the transmitting end first extracts the data of the preset quantity of bytes from the payload of the Ethernet data frame. In other words, the transmitting end extracts the data packet of the service from the payload of the Ethernet data frame. Then, the transmitting end sends the data of the preset quantity of bytes to the receiving end. This is equivalent to that the transmitting end sends the data packet of the service to the receiving end. It can be learned that in a data transmission process, the transmitting end does not transmit the useless data (namely, the padding) to the receiving end, thereby improving utilization of air interface resources.

The following uses a specific example to describe the data transmission method shown in FIG. 14.

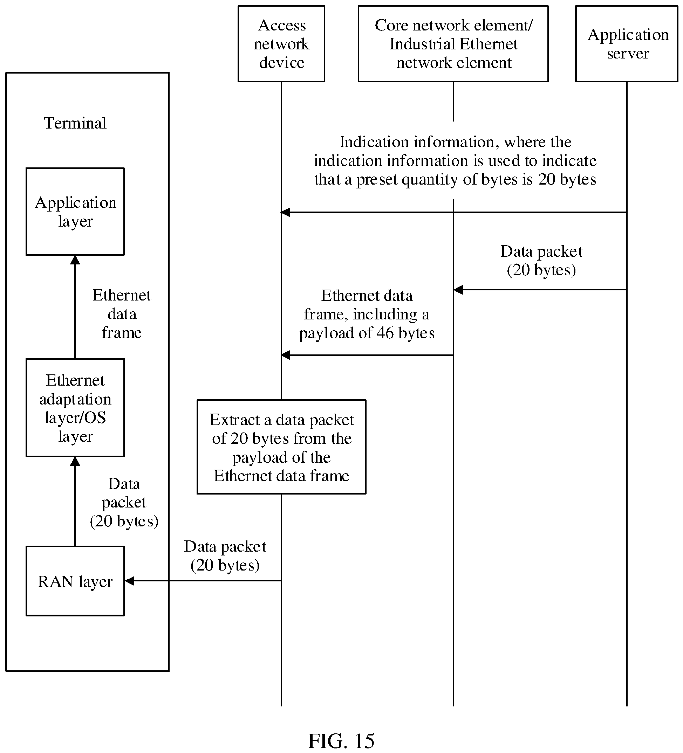

As shown in FIG. 15, an application server sends indication information to an access network device by using a core network element. The indication information is used to indicate that a preset quantity of bytes is 20. In other words, a size of a data packet of a service is 20 bytes. In a downlink transmission process, the application server sends the data packet of 20 bytes to the core network element/an industrial Ethernet network element. The core network element/industrial Ethernet network element encapsulates the data packet of 20 bytes into an Ethernet data frame, and a payload of the Ethernet data frame is 46 bytes. Then, the core network element/industrial Ethernet network element sends the Ethernet data frame to the access network device. The access network device extracts the data packet of 20 bytes from the payload of the Ethernet data frame. The access network device sends the data packet of 20 bytes to a terminal. An RAN layer of the terminal uploads the data packet of 20 bytes to an Ethernet adaptation layer or an operating system (operating system, OS) layer of the terminal. The Ethernet adaptation layer or OS layer of the terminal re-encapsulates the data packet of the service into an Ethernet data frame, and uploads the Ethernet data frame to an application layer of the terminal. The application layer of the terminal decapsulates the Ethernet data frame to obtain the data packet of the service.

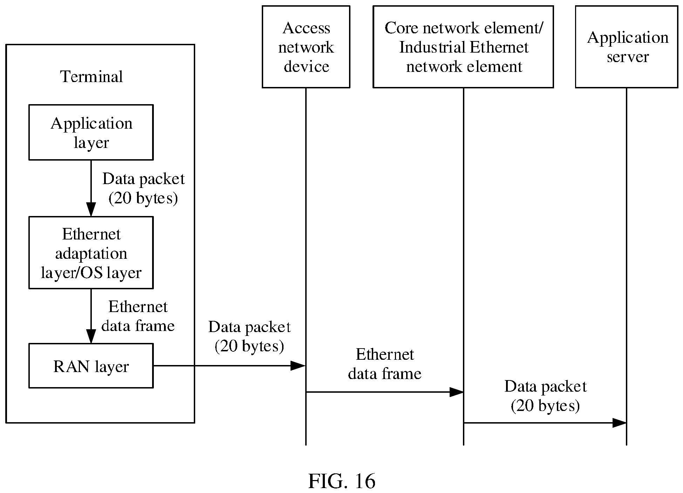

As shown in FIG. 16, in an uplink transmission process, an application layer of a terminal generates a data packet of 20 bytes of a service. Then, an Ethernet adaptation layer or OS layer of the terminal encapsulates the data packet of the service into an Ethernet data frame, and transmits the Ethernet data frame to a RAN layer of the terminal. The RAN layer of the terminal extracts the data packet of 20 bytes from a payload of the Ethernet data frame. The RAN layer of the terminal sends the data packet of the service to the access network device. The access network device re-encapsulates the data packet of the service into an Ethernet data frame, and sends the Ethernet data frame to the core network element/an industrial Ethernet network element. The core network element/industrial Ethernet network element decapsulates the Ethernet data frame to extract the data packet of the service, and sends the data packet of the service to the application server.

The foregoing industrial Ethernet network element refers to a network element that specially processes industrial control data, and is characterized by a single function and a fast processing speed.

The foregoing mainly describes the solutions provided in the embodiments of this application from a perspective of interaction between the network elements. It may be understood that, to implement the foregoing functions, each network element, for example, the access network device and the terminal, includes a corresponding hardware structure and/or software module for performing each function. A person skilled in the art should be easily aware that, in combination with the examples of units and algorithm steps described in the embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement a described function for each particular application, but it should not be considered that the implementation goes beyond the scope of this application.

In the embodiments of this application, functional modules of the access network device and the terminal may be divided based on the foregoing method examples. For example, each function module may be obtained through division based on each corresponding function, or two or more functions may be integrated into one processing module. The integrated module may be implemented in a form of hardware, or may be implemented in a form of a software function module. It should be noted that in the embodiments of this application, division into the modules is an example and is merely logical function division, and may be other division during actual implementation. An example in which each function module is obtained through division based on each corresponding function is used below for description.

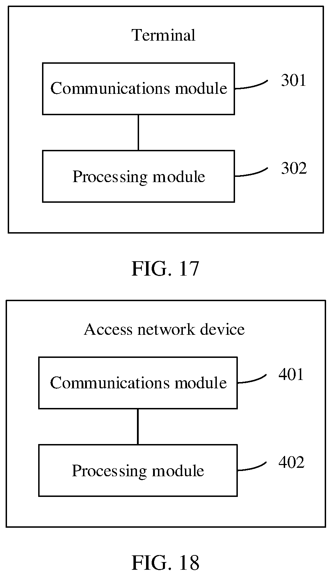

FIG. 17 is a schematic structural diagram of a terminal according to an embodiment of this application. As shown in FIG. 17, the terminal includes a communications module 301 and a processing module 302. The communications module 301 is configured to support the terminal in performing steps S101, and S103 to S105 in FIG. 3, step S201 in FIG. 4, steps S301, S305, and S309 in FIG. 5, steps S401, S404, and S405 in FIG. 6, step S501 in FIG. 7, step S601 in FIG. 8, steps S701, S704, and S706 in FIG. 9, steps S804 and S805 in FIG. 10, step S902 in FIG. 14, and/or another process used for the technical solution described in this specification. The processing module 302 is configured to support the terminal in performing step S102 in FIG. 3, step S901 in FIG. 14, and/or another process used for the technical solution described in this specification. All related content of the steps in the foregoing method embodiments may be cited in function descriptions of the corresponding functional modules. Details are not described herein again.

In an example, with reference to the terminal shown in FIG. 2, the communications module 301 in FIG. 17 may be implemented by the transceiver 103 in FIG. 2, and the processing module 302 in FIG. 17 may be implemented by the processor 101 in FIG. 2. This is not limited in this embodiment of this application.

An embodiment of this application further provides a computer-readable storage medium. The computer-readable storage medium stores computer instructions. When the computer-readable storage medium runs on the terminal shown in FIG. 2, the terminal is enabled to perform the technical solutions shown in FIG. 3 to FIG. 10, and FIG. 14. The computer instructions may be stored in the computer-readable storage medium, or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, wireless, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium, a semiconductor medium (for example, a solid-state drive (solid state disk, SSD)), or the like.

An embodiment of this application further provides a chip system. The chip system includes a processor, configured to support a terminal in implementing the technical solutions shown in FIG. 3 to FIG. 10, and FIG. 14. In a possible design, the chip system further includes a memory. The memory is configured to store program instructions and data that are necessary for the terminal. Certainly, the memory may not exist in the chip system. The chip system may include a chip, or may include a chip and another discrete device. This is not specifically limited in this embodiment of this application.

An embodiment of this application further provides a computer program product including computer instructions. When the computer program product runs on the terminal shown in FIG. 2, a computer is enabled to perform the technical solutions shown in FIG. 3 to FIG. 10, and FIG. 14.

The terminal, the computer storage medium, the chip system, and the computer program product that are provided in the embodiments of this application are all configured to perform the technical solutions shown in FIG. 3 to FIG. 10, and FIG. 14. Therefore, for beneficial effects that can be greater than or equal to those of the terminal, the computer storage medium, the chip system, and the computer program product, refer to the beneficial effects corresponding to the foregoing methods. Details are not described herein again.

FIG. 18 is a schematic structural diagram of an access network device according to an embodiment of this application. As shown in FIG. 18, the access network device includes a communications module 401 and a processing module 402. The communications module 401 is configured to support the access network device in performing steps S101, and S103 to S105 in FIG. 3, step S201 in FIG. 4, steps S301, S302, S304, S305, S306, S308, and S309 in FIG. 5, steps S401 to S405 in FIG. 6, step S501 in FIG. 7, step S601 in FIG. 8, steps S701, S702, and S704 to S706 in FIG. 9, steps S803 and S805 in FIG. 10, step S902 in FIG. 14, and/or another process used for the technical solution described in this specification. The processing module 402 is configured to support the access network device in performing step S106 in FIG. 3, step S703 in FIG. 9, step S901 in FIG. 14, and/or another process used for the technical solution described in this specification. All related content of the steps in the foregoing method embodiments may be cited in function descriptions of the corresponding functional modules. Details are not described herein again.

In an example, with reference to the access network device shown in FIG. 2, the communications module 401 in FIG. 18 may be implemented by the transceiver 203 in FIG. 2, and the processing module 402 in FIG. 18 may be implemented by the processor 201 in FIG. 2. This is not limited in this embodiment of this application.

An embodiment of this application further provides a computer-readable storage medium. The computer-readable storage medium stores instructions. When the computer-readable storage medium runs on the access network device shown in FIG. 2, the access network device is enabled to perform the technical solutions shown in FIG. 3 to FIG. 10, and FIG. 14.

An embodiment of this application further provides a chip system. The chip system includes a processor, configured to support the access network device shown in FIG. 2 in implementing the technical solutions shown in FIG. 3 to FIG. 10, and FIG. 14. In a possible design, the chip system further includes a memory. The memory is configured to store program instructions and data that are necessary for the access network device. Certainly, the memory may not exist in the chip system. The chip system may include a chip, or may include a chip and another discrete device. This is not specifically limited in this embodiment of this application.

An embodiment of this application further provides a computer program product including computer instructions. When the computer program product runs on the access network device shown in FIG. 2, a computer is enabled to perform the technical solutions shown in FIG. 3 to FIG. 10, and FIG. 14.

The access network device, the computer storage medium, the chip system, and the computer program product provided in the embodiments of this application are all configured to perform the technical solutions shown in FIG. 3 to FIG. 10, and FIG. 14. Therefore, for beneficial effects that can be greater than or equal to those of the access network device, the computer storage medium, the chip system, and the computer program product, refer to the beneficial effects corresponding to the foregoing methods. Details are not described herein again.

Although this application is described with reference to the embodiments, in a procedure of implementing this application that claims protection, a person skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a great effect.

Although this application is described with reference to specific features and the embodiments thereof, it is clear that various modifications and combinations may be made to them without departing from the spirit and scope of this application. Correspondingly, the specification and accompanying drawings are merely example description of this application defined by the appended claims, and is considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies in this application.

## Claims

1. A network access method, wherein the method comprises:
sending, by an access network device, an access list of a cell, wherein the access list of the cell comprises at least one media access control MAC address or group identifier;
receiving, by the access network device, a message 3 sent by a terminal, wherein the message 3 comprises a MAC address or a group identifier of the terminal; and
determining, by the access network device depending on whether the MAC address or the group identifier of the terminal exists in the access list of the cell, whether the terminal can access the cell.

2. The network access method according to claim 1, wherein the method further comprises:
sending, by the access network device, common configuration information, wherein the common configuration information is used to indicate common configuration parameters of a working group, the common configuration information carries a group radio network temporary identifier RNTI, there is a correspondence between the group RNTI and a group identifier of the working group, and the working group comprises at least one terminal.

3. The network access method according to claim 1 or 2, wherein the method further comprises:
sending, by the access network device, the MAC address of the terminal to a target control node, wherein the target control node is a control node configured to manage the terminal; and
sending, by the access network device, a MAC address of the target control node to the terminal.

4. The network access method according to claim 3, wherein the method further comprises:
sending, by the access network device to the terminal, logical channel identifiers corresponding to at least two target control nodes; or
allocating, by the access network device, at least two radio network temporary identifiers RNTIs to the terminal, wherein each RNTI corresponds to one target control node.

5. The network access method according to claim 1 or 2, wherein the method further comprises:
obtaining, by the access network device, the MAC address of the terminal and a MAC address of a control node; and
generating, by the access network device, a context list, wherein the context list comprises a correspondence between the MAC address of the terminal and a context identifier, and a correspondence between the MAC address of the control node and a context identifier.

6. The network access method according to claim 1 or 2, wherein the method further comprises:
obtaining, by the access network device, a context list from a core network element, wherein the context list comprises a correspondence between a MAC address and a context identifier.

7. The network access method according to any one of claims 1 to 6, wherein the method further comprises:
extracting, by the access network device, data of a preset quantity of bytes from a payload of an Ethernet data frame; and
sending, by the access network device, the data of the preset quantity of bytes to the terminal.

8. A network access method, wherein the method comprises:
receiving, by a terminal, an access list of a cell sent by an access network device, wherein the access list of the cell comprises at least one media access control MAC address or group identifier;
detecting, by the terminal, whether a MAC address or a group identifier of the terminal exists in the access list of the cell; and
if the MAC address or the group identifier of the terminal exists in the access list of the cell, sending, by the terminal, a message 3 to the access network device, to access the cell, wherein the message 3 comprises the MAC address or the group identifier of the terminal.

9. The network access method according to claim 8, wherein the method further comprises:
receiving, by the terminal based on a group radio network temporary identifier RNTI of the terminal, common configuration information sent by the access network device, wherein the common configuration information is used to indicate common configuration parameters of a working group, the common configuration information carries the group RNTI, there is a correspondence between the group RNTI and a group identifier of the working group, and the working group comprises at least one terminal.

10. The network access method according to claim 8 or 9, wherein the method further comprises:
receiving, by the terminal, a MAC address of a target control node sent by the access network device, wherein the target control node is a control node configured to manage the terminal.

11. The network access method according to claim 10, wherein the method further comprises:
obtaining, by the terminal, logical channel identifiers corresponding to at least two target control nodes; or
obtaining, by the terminal, at least two radio network temporary identifiers RNTIs, wherein each RNTI corresponds to one target control node.

12. The network access method according to claim 8 or 9, wherein the method further comprises:
obtaining, by the terminal, a context list from the access network device, wherein the context list comprises a correspondence between the MAC address of the terminal and a context identifier, and a correspondence between a MAC address of a control node and a context identifier.

13. The network access method according to claim 8 or 9, wherein the method further comprises:
obtaining, by the terminal, a context list from a core network element, wherein the context list comprises a correspondence between a MAC address and a context identifier.

14. The network access method according to any one of claims 8 to 13, wherein the method further comprises:
extracting, by the terminal, data of a preset quantity of bytes from a payload of an Ethernet data frame; and
sending, by the terminal, the data of the preset quantity of bytes to the access network device.

15. A communications apparatus, comprising:
a communications module, configured to send an access list of a cell, wherein the access list of the cell comprises at least one media access control MAC address or group identifier, and
the communications module is further configured to receive a message 3 sent by a terminal, wherein the message 3 comprises a MAC address or a group identifier of the terminal; and
a processing module, configured to determine, depending on whether the MAC address or the group identifier of the terminal exists in the access list of the cell, whether the terminal can access the cell.

16. The communications apparatus according to claim 15, wherein
the communications module is further configured to send common configuration information, wherein the common configuration information is used to indicate common configuration parameters of a working group, the common configuration information carries a group radio network temporary identifier RNTI, there is a correspondence between the group RNTI and a group identifier of the working group, and the working group comprises at least one terminal.

17. The communications apparatus according to claim 15 or 16, wherein
the communications module is further configured to: after the terminal accesses the cell, send the MAC address of the terminal to a target control node, wherein the target control node is a control node configured to manage the terminal; and send a MAC address of the target control node to the terminal.

18. The communications apparatus according to claim 17, wherein
the communications module is further configured to: send, to the terminal, logical channel identifiers corresponding to at least two target control nodes; or allocate at least two radio network temporary identifiers RNTIs to the terminal, wherein each RNTI corresponds to one target control node.

19. The communications apparatus according to claim 15 or 16, wherein
the communications module is further configured to obtain the MAC address of the terminal and a MAC address of a control node; and
the processing module is further configured to generate a context list, wherein the context list comprises a correspondence between the MAC address of the terminal and a context identifier, and a correspondence between the MAC address of the control node and a context identifier.

20. The communications apparatus according to claim 15 or 16, wherein
the communications module is further configured to obtain a context list from a core network element, wherein the context list comprises a correspondence between a MAC address and a context identifier.

21. The communications apparatus according to any one of claims 15 to 20, wherein
the processing module is further configured to extract data of a preset quantity of bytes from a payload of an Ethernet data frame; and
the communications module is further configured to send the data of the preset quantity of bytes to the terminal.

22. A communications apparatus, comprising:
a communications module, configured to receive an access list of a cell sent by an access network device, wherein the access list of the cell comprises at least one media access control MAC address or group identifier; and
a processing module, configured to detect whether a MAC address or a group identifier of a terminal exists in the access list of the cell, wherein
the communications module is further configured to: when the processing module determines that the MAC address or the group identifier of the terminal exists in the access list of the cell, send a message 3 to the access network device, to access the cell, wherein the message 3 comprises the MAC address or the group identifier of the terminal.

23. The communications apparatus according to claim 22, wherein
the communications module is further configured to: receive, based on a group radio network temporary identifier RNTI of the terminal, common configuration information sent by the access network device, wherein the common configuration information is used to indicate common configuration parameters of a working group, the common configuration information carries the group RNTI, there is a correspondence between the group RNTI and a group identifier of the working group, and the working group comprises at least one terminal.

24. The communications apparatus according to claim 22 or 23, wherein
the communications module is further configured to receive a MAC address of a target control node sent by the access network device, wherein the target control node is a control node configured to manage the terminal.

25. The communications apparatus according to claim 24, wherein
the communications module is further configured to: obtain logical channel identifiers corresponding to at least two target control nodes; or obtain at least two radio network temporary identifiers RNTIs, wherein each RNTI corresponds to one target control node.

26. The communications apparatus according to claim 22 or 23, wherein
the communications module is further configured to: obtain a context list from the access network device, wherein the context list comprises a correspondence between the MAC address of the terminal and a context identifier, and a correspondence between a MAC address of a control node and a context identifier.

27. The communications apparatus according to claim 22 or 23, wherein
the communications module is further configured to obtain a context list from a core network element, wherein the context list comprises a correspondence between a MAC address and a context identifier.

28. The communications apparatus according to any one of claims 22 to 27, wherein
the processing module is further configured to extract data of a preset quantity of bytes from a payload of an Ethernet data frame; and
the communications module is further configured to send the data of the preset quantity of bytes to the access network device.

29. A computer-readable storage medium, comprising instructions, wherein when the instructions are run, the network access method according to any one of claims 1 to 14 is enabled to be performed.

30. A computer program product, wherein the computer program product stores instructions, and when the computer program product runs on a computer, the computer is enabled to perform the network access method according to any one of claims 1 to 14.

31. A chip, wherein the chip comprises a processor, and when the processor executes instructions, the processor is configured to perform the network access method according to any one of claims 1 to 14.

32. A communications system, wherein the communications system comprises an access network device and a terminal, wherein the access network device is configured to perform the network access method according to any one of claims 1 to 7, and the terminal is configured to perform the network access method according to any one of claims 8 to 14.
